(19) Europäisches Patentamt
European Patent Office
Office européen des brevets

(11) **EP 2 019 349 A1**

(12) **EUROPÄISCHE PATENTANMELDUNG**

(43) Veröffentlichungstag:
**28.01.2009 Patentblatt 2009/05**

(51) Int Cl.:
***G05F 1/56*** *(2006.01)*

(21) Anmeldenummer: **08011311.1**

(22) Anmeldetag: **21.06.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **27.07.2007 DE 102007035369**

(71) Anmelder: **Sitronic Ges. Für Elektrotechnische Ausrüstung Mbh & Co. Kg**
**71116 Gärtringen (DE)**

(72) Erfinder: **Zametzky, Klaus**
**91126 Schwabach (DE)**

(74) Vertreter: **Kohler Schmid Möbus Patentanwälte Ruppmannstrasse 27 70565 Stuttgart (DE)**

(54) **Schaltungsanordnung zur temperaturabhängigen Laststromregelung**

(57) Die Erfindung betrifft eine Schaltungsanordnung (2) zur Regelung eines Stroms ($I_L$) durch eine Last ($R_L$), mit: einem Widerstand ($R_s$), der vom Laststrom ($I_L$) durchflossen wird und an dem eine Spannung ($V_S$) abfällt, welche als Regelgröße für die Regelung des Laststroms ($I_L$) dient, einem Abgriff (P) für eine Referenzspannung ($V_{ref}$), welche als Führungsgröße für die Regelung des Laststroms ($I_L$) dient, und einem Differenzverstärker zur Verstärkung der Regelabweichung ($V_{ref}$ - $V_s$). Der Differenzverstärker weist zur Regelung des Laststroms ($I_L$) in Abhängigkeit von der Temperatur einen ersten und zweiten Transistor (Q1, Q2) auf, und die Schaltungsanordnung (2) ist zum Betrieb der beiden Transistoren (Q1, Q2) bei gleicher Kollektor-Emitter-Spannung ($U_{CE1}$, $U_{CE2}$) und konstantem und von eins verschiedenem Verhältnis der Kollektorruheströme ($I_{C1}$, $I_{C2}$) ausgelegt, so dass die Schaltungsanordnung (2) durch die halbleiterphysikalisch bedingte Temperaturspannung gesteuert, den Laststrom ($I_L$) in Abhängigkeit von der Temperatur definiert regelt. Die Erfindung betrifft weiterhin ein Kraftfahrzeuggebläse mit einer solchen Schaltungsanordnung (2) und ein zugeordnetes Verfahren.

Fig. 2

**Beschreibung**

Die Erfindung betrifft eine Schaltungsanordnung zur temperaturabhängigen Regelung eines Stroms durch eine Last mit: einem Widerstand, der vom Laststrom durchflossen wird und an dem eine Spannung abfällt, welche als Regelgröße für die Regelung des Laststroms dient, einem Abgriff für eine Referenzspannung, welche als Führungsgröße für die Regelung des Laststroms dient, und einem Differenzverstärker zur Verstärkung der Regelabweichung. Die Erfindung betrifft weiterhin ein Kraftfahrzeuggebläse mit einer solchen Schaltungsanordnung sowie ein zugehöriges Verfahren zum temperaturabhängigen Regeln eines Stroms durch eine Last mittels einer an einem vom Laststrom durchflossen Widerstand abfallenden Spannung als Regelgröße für die Regelung des Laststroms, sowie mittels einer Referenzspannung als Führungsgröße für die Regelung des Laststroms, wobei die Regelabweichung in einem Differenzverstärker verstärkt wird.

Die oben beschriebene Schaltungsanordnung kann allgemein als Schutzschaltung oder auch in der Regelungstechnik, insbesondere in der KFZ-Klimaregelung, Verwendung finden. Eine temperaturabhängige Regelung des Laststroms ist insbesondere dann günstig, wenn die Leistungsaufnahme durch den Lastwiderstand nicht konstant ist, sondern z.B. von der Umgebungstemperatur abhängt. Dies ist bei einem Gebläsemotor eines KfZ-Gebläses der Fall, und zwar deshalb, weil warme Luft aufgrund der schnelleren Bewegung der Luftmoleküle einen höheren Strömungswiderstand für den Gebläsemotor aufweist als kalte Luft, denn in einem betrachteten Zeitraum und Raumvolumen kommt es in warmer Luft statistisch häufiger zu Kollisionsvorgängen zwischen Molekülen als in kalter Luft. Analog zum Elektronengas in einem metallischen Leiter, in dem die Beweglichkeit der Elektronen mit der Temperatur sinkt und der elektrische Widerstand steigt, steigt daher auch der Strömungswiderstand des Luftstromes in einem HVAC (Heating, Ventilation and Air Conditioning)-System mit der Gastemperatur. Strömt die Luft langsamer, so nimmt der Gebläsemotor weniger Strom auf als bei hoher Luftströmungsgeschwindigkeit. Viele Klimatisierungssysteme haben daher die Eigenschaft, bei gegebener Motorspannung bei Kälte mehr Strom aufzunehmen als bei Wärme. Die Motorstromaufnahme sinkt folglich mit steigender Temperatur.

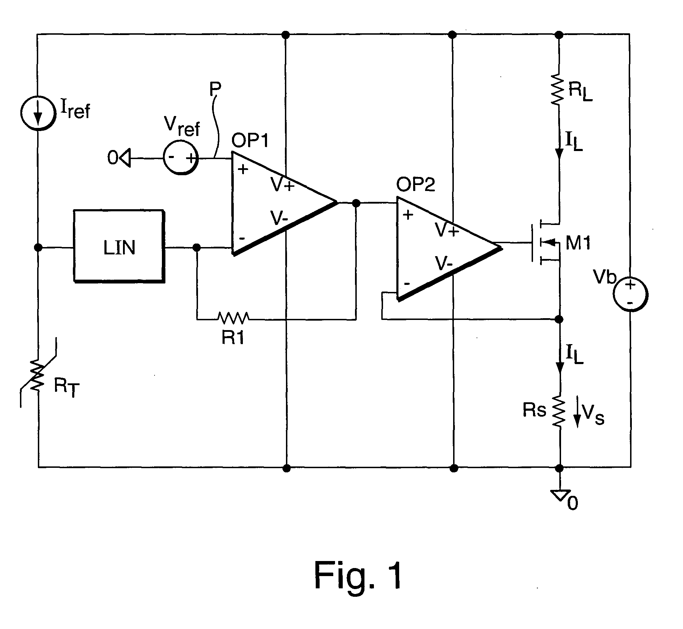

**Fig. 1** zeigt eine aus dem Stand der Technik bekannte Schaltungsanordnung **1** zur temperaturabhängigen Regelung eines Laststroms $I_L$ durch einen Lastwiderstand $R_L$. Hierzu speist eine Stromquelle $I_{ref}$ (zur Vereinfachung der Darstellung wird im Folgenden nicht zwischen Widerständen, Spannungs- und Stromquellen als Bauelementen und den von diesen erzeugten Widerständen, Spannungen und Strömen unterschieden) einen temperaturabhängigen Widerstand $R_T$, der als Temperatursensor dient. Derartige temperaturabhängige Widerstände weisen in der Regel eine (mehr oder weniger) nichtlineare Kennlinie in Abhängigkeit von der Temperatur auf. Der Spannungsabfall über dem temperaturabhängigen Widerstrand $R_T$ wird daher zunächst einem Linearisierungsnetzwerk **LIN** zugeführt. Ein erster, als Differenzverstärker mit einem weiteren Widerstand **R1** zwischen invertierendem Eingang und Ausgang geschalteter Operationsverstärker **OP1** subtrahiert das linearisierte Signal von einer dem ersten Operationsverstärker OP1 an einem Punkt **P** der Schaltung (Abgriff) zugeführten Referenzspannung $V_{ref}$. Ein nachfolgender, zweiter Operationsverstärker **OP2** übernimmt die eigentliche Stromregelung, indem er eine über einem vom Laststrom $I_L$ durchflossenen Shunt-Widerstand $R_s$ abfallende Spannung $V_s$ mit der Ausgangsspannung des ersten Operationsverstärkers OP1 vergleicht und die Steuerspannung am Gate des als Stellglied dienenden Leistungstransistors **M1** (MOS-FET) stetig nachregelt. Eine Spannungsquelle $V_b$ dient zur Versorgung der Bauteile der Schaltungsanordnung 1 mit einer für KFZ-Elektronik typischen Batterie-Spannung von $V_b$ = 12 V. Die Schaltungsanordnung 1 kann den Laststrom $I_L$ bspw. an einem Gebläsemotor als Last linear in Abhängigkeit von der (Umgebungs-)Temperatur regeln, wobei der Laststrom z.B. bei Raumtemperatur 10 A betragen und mit steigender Temperatur sinken bzw. mit fallender Temperatur steigen kann.

Soll die Schaltungsanordnung 1, wie in KFZ-Anwendungen üblich, über einen weiten Temperaturbereich zwischen -30°C und 150°C stabil funktionieren, so ist der finanzielle Aufwand für deren Herstellung nicht unerheblich, da in diesem Fall u. a. an den Temperatursensor $R_T$, die Referenzquellen $I_{ref}$ und $V_{ref}$, das Linearisierungsnetzwerk LIN und an die beiden Operationsverstärker OP1, OP2 hohe Genauigkeitsanforderungen gestellt werden.

Der Erfindung liegt die Aufgabe zugrunde, eine kostengünstige, aus wenigen Bauteilen bestehende Schaltungsanordnung zur insbesondere linearen Regelung des Stroms durch eine Last, insbesondere durch einen Gebläsemotor, in Abhängigkeit von der Temperatur bereitzustellen.

Diese Aufgabe wird durch die Schaltungsanordnung der eingangs genannten Art gelöst, bei welcher der Differenzverstärker zur Regelung des Laststroms in Abhängigkeit von der Temperatur einen ersten und zweiten Transistor aufweist, wobei die Schaltungsanordnung zum Betrieb der beiden Transistoren bei gleicher Kollektor-Emitter-Spannung und konstantem und von eins verschiedenem Verhältnis der Kollektorruheströme ausgelegt ist.

Der Erfinder hat erkannt, dass die temperaturabhängige Regelung des Laststroms über ein definiertes Temperaturverhalten der Schaltungsanordnung bzw. einzelner Bauteile der Schaltungsanordnung realisiert werden kann, sodass auf die Verwendung eines Temperatursensors verzichtet werden kann. Hierzu weist die Schaltungsanordnung zwei (Bipolar-)Transistoren auf, deren halbleiterphysikalisch bedingte Temperaturspannungen definiert als Regelgröße für den Laststrom verwendet werden können, wobei die Temperaturabhängigkeit der Laststromregelung durch die Wahl des Verhältnisses der Kollektorströme eingestellt werden kann. Dieses Verhältnis kann über den gesamten Temperaturbereich der Regelung konstant sein oder einem vorgebbaren Temperaturverlauf folgen. Da bei einem Stromverhältnis von eins sich der Einfluss der Temperaturspannungen der beiden Transistoren auf den Laststrom gerade kompensiert, ist es zur Einstellung eines in Abhängigkeit von der Temperatur variablen Laststroms erforderlich, ein Stromverhältnis ungleich eins zu wählen.

Ist das Verhältnis der beiden Kollektorruheströme konstant (und ungleich eins) so ergibt sich ein konstanter und von Null verschiedener Temperaturkoeffizient, d.h. ein linearer Zusammenhang zwischen Laststrom und Temperatur. Der Temperaturkoeffizient kann hierbei in Abhängigkeit vom Verhältnis der Kollektorströme zueinander sowohl im Betrag als auch im Vorzeichen festgelegt werden. Daher kann man die Schaltungsanordnung so dimensionieren, dass sie bei niedrigen Temperaturen höhere und mit zunehmender Temperatur niedrigere Ströme zulässt und sich so dem Temperaturverhalten der Last anpasst, wobei das Temperaturverhalten der Schaltung ausschließlich durch Bauteildimensionierung erreicht wird. Für die Temperatursteuerfunktion sind daher keine weiteren Bauelemente erforderlich.

Bei einer vorteilhaften Ausführungsform sind die beiden Transistoren des Differenzverstärkers basisgekoppelt oder emittergekoppelt. Durch die Emitterkopplung lässt sich ein hoher Eingangswiderstand des Differenzverstärkers erreichen. Auch eine Basiskopplung ist bei der vorliegenden Schaltungsanordnung möglich, da der vom Laststrom durchflossene Shunt-Widerstand in der Regel niederohmig ist, weshalb ein hoher Eingangswiderstand des Differenzverstärkers nicht zwingend erforderlich ist.

Bei einer bevorzugten Ausführungsform sind zur Erzeugung gleicher Kollektor-Emitter-Spannungen die beiden Transistoren des Differenzverstärkers in einer Kaskodenstruktur mit einem dritten und einem vierten Transistor eingebettet. Der dritte bzw. vierte Transistor bildet hierbei jeweils die basisgekoppelte Stufe der Kaskodenschaltung, während der erste bzw. zweite Transistor jeweils die emittergekoppelte Stufe bildet.

Bei einer weiteren vorteilhaften Ausführungsform weist die Schaltungsanordnung zwei Widerstände auf, deren Widerstandsverhältnis das konstante Verhältnis der Kollektorruheströme festlegt. Die Widerstände können hierzu in einer klassischen Stromspiegelschaltung mit zwei weiteren Transistoren verschaltet sein. Es versteht sich, dass auch andere Möglichkeiten zur Erzeugung eines konstanten Verhältnisses der Kollektorruheströme bestehen, wie z.B. das Vorsehen von zwei Konstantstromquellen. Auch kann ggf. der Stromspiegel durch Einstellung eines geeigneten Verhältnisses der aktiven (Emitter-)Flächen zweier Transistoren erzeugt werden.

Bei einer besonders vorteilhaften Ausführungsform sind die beiden Transistoren des Differenzverstärkers durch einen Doppeltransistor gebildet. Die beiden Transistoren eines Doppeltransistors sind thermisch miteinander gekoppelt und weisen gleiche bzw. sehr ähnliche elektrische Parameter auf, was für eine definierte Einstellung der Temperaturabhängigkeit der Schaltungsanordnung günstig ist.

Bei einer weiteren vorteilhaften Ausführungsform weist die Schaltungsanordnung einen weiteren Transistor, bevorzugt einen Leistungstransistor, als Stellglied für den Regelkreis auf. Leistungstransistoren werden beispielsweise zur Steuerung von großen Strömen, wie sie in Gebläsemotoren von Kraftfahrzeugen auftreten, eingesetzt. Der Leistungstransistor ist bevorzugt als MOSFET ausgebildet, wodurch die Einstellung des Laststroms spannungsgesteuert, d.h. praktisch ohne Steuerstrom ermöglicht wird.

Bei einer bevorzugten Weiterbildung sind die beiden Transistoren des Differenzverstärkers thermisch mit dem weiteren Transistor gekoppelt. Durch die thermische Kopplung weisen die Transistoren des Differenzverstärkers und der weitere Transistor dieselbe Temperatur auf, sodass die Schaltungsanordnung den Laststrom in Abhängigkeit von der Temperatur des weiteren Transistors regelt und diesen vor thermischer Überlastung schützt.

Bei einer weiteren Ausführungsform sind die beiden Transistoren des Differenzverstärkers thermisch mit der Last gekoppelt, sodass diese dieselbe Temperatur aufweisen. Der Laststrom wird somit in Abhängigkeit von der Temperatur der Last geregelt, wodurch diese vor thermischer Überlastung geschützt werden kann.

Bei einer Ausführungsform sind die beiden Transistoren des Differenzverstärkers thermisch mit einem Umgebungsmedium, insbesondere einem Luftstrom einer Klimaanlage oder einer Kühlflüssigkeit eines Kühlwasserkreises gekoppelt, sodass der Laststrom in Abhängigkeit von der Temperatur des Umgebungsmediums geregelt werden kann.

Besonders vorteilhaft ist es, wenn die Schaltungsanordnung aus diskreten Bauteilen aufgebaut ist. Da die erfindungsgemäße Schaltungsanordnung aus verhältnismäßig wenigen Bauteilen besteht, kann sie kostengünstig diskret hergestellt werden. Diskret aufgebaut ist eine solche Schaltungsanordnung robust, d.h. sie lässt sich auch bei hohen Temperaturen von bis zu 150°C betreiben.

Die Erfindung ist weiterhin realisiert in einem Kraftfahrzeuggebläse mit einer Schaltungsanordnung wie oben beschrieben, bei dem die Last durch einen Gebläsemotor gebildet ist. Hierdurch kann die gewünschte, bevorzugt lineare Abhängigkeit des Laststroms in Abhängigkeit von der Temperatur erreicht werden.

Die Erfindung ist ferner realisiert in einem Verfahren der eingangs genannten Art zum temperaturabhängigen Regeln eines Stroms durch eine Last, bei dem zur Regelung des Laststroms in Abhängigkeit von der Temperatur ein erster und zweiter Transistor des Differenzverstärkers bei gleicher Kollektor-Emitter-Spannung und konstantem und von eins verschiedenem Verhältnis der Kollektorruheströme betrieben werden.

Ausführungsbeispiele der erfindungsgemäßen Schaltungsanordnung sind in den schematischen Zeichnungen dargestellt und werden in der nachfolgenden Beschreibung erläutert. Es zeigt:

**Fig. 1** ein Schaltbild einer Schaltungsanordnung zur temperatur- abhängigen Regelung eines Laststroms nach dem Stand der Technik,

**Fig. 2** eine erste Ausführungsform einer erfindungsgemäßen Schal- tungsanordnung zur temperaturabhängigen Laststromregelung mit zwei emittergekoppelten Transistoren als Differenz- verstärker, und

**Fig. 3** eine zweite Ausführungsform einer erfindungsgemäßen Schal- tungsanordnung mit zwei basisgekoppelten Transistoren als Differenzverstärker.

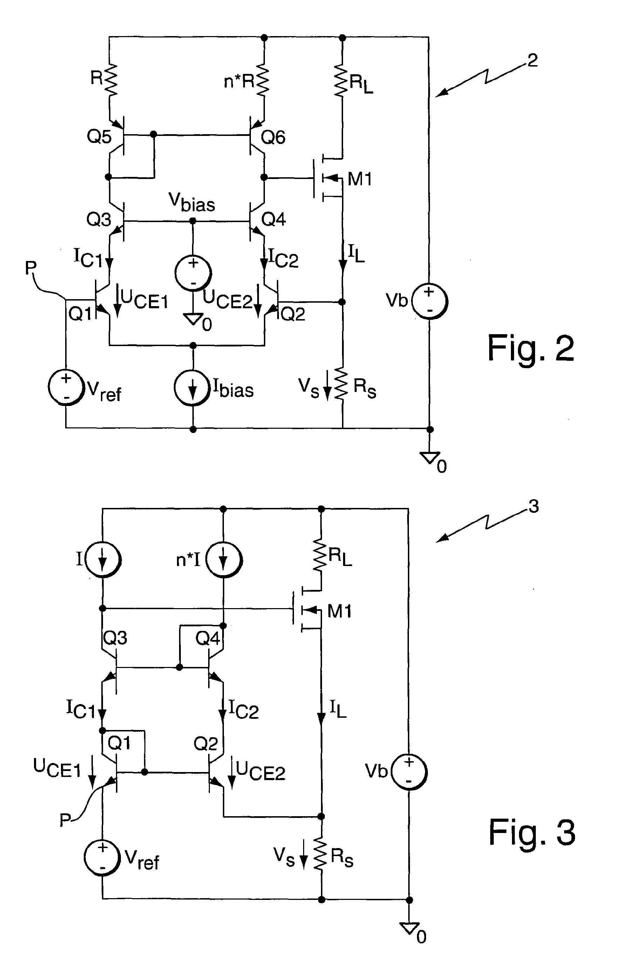

In **Fig. 2** ist eine Schaltungsanordnung **2** zur temperaturabhängigen Regelung des Laststroms $I_L$ an der Last $R_L$ von Fig. 1 gezeigt. Die Schaltungsanordnung 2 weist hierzu einen Abgriffspunkt P an der Basis eines ersten Bipolar-Transistors **Q1** für die als Führungsgröße zur Regelung des Laststroms $I_L$ dienende Referenzspannung $V_{ref}$ auf. Es versteht sich, dass als Referenzspannung $V_{ref}$ ggf. auch das Massepotential **0** abgegriffen werden kann, so dass in der Schaltungsanordnung 2 keine Referenzspannungsquelle vorgesehen werden muss.

Die Schaltungsanordnung 2 weist zur temperaturabhängigen Laststromregelung den oben in Zusammenhang mit Fig. 1 beschriebenen, vom Laststrom $I_L$ durchflossenen Shunt-Widerstand $R_S$ auf, an dem die als Regelgröße für die Regelung des Laststroms dienende Spannung $V_S$ abfällt, welche das Basispotential für einen zweiten Bipolar-Transistor **Q2** bildet. Der erste und der zweite Transistor Q1, Q2 sind emittergekoppelt und bilden einen Differenzverstärker zur Verstärkung der Regelabweichung, d.h. der Differenz zwischen der Referenzspannung $V_{ref}$ und der Spannung $V_S$ am Shunt-Widerstand $R_S$. Die beiden Transistoren Q1, Q2 sind als Doppeltransistor ausgebildet und weisen daher nahezu identische thermische und elektronische Eigenschaften auf.

Um eine definierte, vom Early-Effekt unabhängige, temperaturgesteuerte Regelung des Laststroms zu ermöglichen, werden der erste und der zweite Transistor Q1, Q2 mit gleicher Kollektor-Emitter-Spannung betrieben, d.h. es gilt **$U_{CE1} = U_{CE2}$**. Dies wird dadurch ermöglicht, dass der erste und zweite Transistor Q1, Q2 jeweils eine erste, emittergekoppelte Stufe einer Kaskodenschaltung bilden, deren zweite, basisgekoppelte Stufe von einem dritten und vierten Transistor **Q3, Q4** gebildet wird. Die Basis des dritten und vierten Transistors liegen auf gleichem Bias-Potential **$V_{bias}$**, weshalb im Normalbetrieb deren Emitter ebenfalls auf einem entsprechend geringeren, identischen Potential liegen, so dass die Kollektoren des ersten und zweiten Transistors Q1, Q2 ebenfalls ein identisches Potential aufweisen. Ferner sind die Emitter des ersten und zweiten Transistors Q1, Q2 miteinander verbunden, weshalb sich insgesamt eine identische Kollektor-Emitter-Spannung $U_{CE1} = U_{CE2}$ einstellt.

Weiterhin ist es für die Erzeugung einer definierten, linearen Temperaturabhängigkeit des Laststroms $I_L$ zwingend erforderlich, dass die beiden Transistoren Q1, Q2 des Differenzverstärkers mit konstantem Verhältnis der Kollektorströme **$I_{C1}$** bzw. **$I_{C2}$** betrieben werden. Hierzu weist die Schaltungsanordnung 2 von Fig. 2 einen klassischen Stromspiegel mit zwei weiteren Widerständen **R und n R** sowie mit einem fünften und sechsten Transistor **Q5, Q6** auf. Die Basis-Kollektor-Strecke des fünften Transistors Q5 ist hierbei überbrückt, wie bei Stromspiegeln üblich, und eine Bias-Stromquelle **$I_{bias}$** dient der Einstellung des Gesamtstroms des Stromspiegels. Am Kollektor des sechsten Transistors Q6 wird die Gate-Spannung für den Leistungstransistor M1 abgegriffen.

Im Folgenden wird anhand von Berechnungen dargestellt, wie bei vorgegebenem Verhältnis der Kollektorströme $I_{C1}$ zu $I_{C2}$ und identischen Kollektor-Emitter-Potentialen $U_{CE1} = U_{CE2}$ des ersten und zweiten Transistors Q1, Q2 die gewünschte lineare Abhängigkeit des Laststroms $I_L$ von der Temperatur erreicht werden kann. Die Angaben in Klammern beziehen sich hierbei auf den jeweiligen Transistor Q1 bzw. Q2.

Nach der Kirchhoff'schen Regel ergibt sich für das Emitterpotential der beiden Transistoren Q1, Q2:

$$V_{ref} - U_{BE}(Q1) = I_L \cdot R_S - U_{BE}(Q2)$$

Für den Laststrom $I_L$ ergibt sich somit:

$$I_L = \frac{V_{ref} + U_{BE}(Q2) - U_{BE}(Q1)}{R_S} \ . \tag{1}$$

Zwischen dem Kollektorstrom $I_C$ eines Transistors, der Basis-Emitter-Spannung $U_{BE}$, der Kollektor-Emitter-Spannung $U_{CE}$, der Early-Spannung $U_A$ , der Temperaturspannung $U_T$ und dem Sättigungssperrstrom $I_S$ besteht folgender, aus der Standardliteratur bekannter Zusammenhang:

$$I_C = I_S \cdot e^{\frac{U_{BE}}{U_T}} \cdot \left(1 + \frac{U_{CE}}{U_A}\right).$$

Auflösen nach der Basis-Emitter-Spannung $U_{BE}$ ergibt:

$$U_{BE} = U_T \cdot \ln \frac{I_C}{I_S \cdot \left(1 + \frac{U_{CE}}{U_A}\right)}.$$

Bildet man die Differenz zwischen den Basis-Emitter-Spannungen der beiden Transistoren Q1, Q2 so erhält man mit obiger Gleichung:

$$U_{BE}(Q2) - U_{BE}(Q1) = U_T \cdot \left( \ln \frac{I_C(Q2)}{I_S(Q2) \cdot \left(1 + \frac{U_{CE}(Q2)}{U_A(Q2)}\right)} - \ln \frac{I_C(Q1)}{I_S(Q1) \cdot \left(1 + \frac{U_{CE}(Q1)}{U_A(Q1)}\right)} \right),$$

was nach Umformung auf folgende Gleichung führt:

$$U_{BE}(Q2) - U_{BE}(Q1) = U_T \cdot \ln \frac{I_C(Q2) \cdot I_S(Q1) \cdot \left(1 + \frac{U_{CE}(Q1)}{U_A(Q1)}\right)}{I_C(Q1) \cdot I_S(Q2) \cdot \left(1 + \frac{U_{CE}(Q2)}{U_A(Q2)}\right)}. \tag{2}$$

Verwendet man für den ersten und zweiten Transistor Q1, Q2 wie oben beschrieben einen Doppeltransistor mit gepaarten Eigenschaften, so ähneln sich deren Sperrströme $I_S$, es gilt:

$$I_S(Q1) \approx I_S(Q2).$$

Ferner bewirken der dritte und vierte Transistor Q3, Q4, dass der erste und zweite Transistor Q1, Q2 näherungsweise gleiche Kollektorpotentiale aufweisen. Es gilt:

$$\left|U_{CE}(Q1) - U_{CE}(Q2)\right| \ll U_A(Q1) \approx U_A(Q2).$$

Somit vereinfacht sich Gleichung (2) wesentlich zu:

$$U_{BE}(Q2) - U_{BE}(Q1) \;=\; U_T \cdot \ln \frac{I_C(Q2)}{I_C(Q1)} \;.$$

Einsetzen dieser Gleichung in die Gleichung 1) für den Laststrom $I_L$ liefert:

$$I_L = \frac{V_{ref} + U_T \cdot \ln \dfrac{I_C(Q2)}{I_C(Q1)}}{R_S} \;. \tag{3}$$

Die Temperaturspannung $U_T$ ist auf Naturkonstanten rückführbar und steigt linear mit der Temperatur T, es gilt:

$$U_T = \frac{k}{e} \cdot T = \frac{1{,}380662 \cdot 10^{-23} J}{1{,}6021892 \cdot 10^{-19} C} \cdot T = 86{,}17 \frac{\mu V}{K} \cdot T \;. \tag{4}$$

Bemerkenswert an der obigen Berechnung ist, dass in den Wert des Laststroms $I_L$ lediglich die Referenzspannung $V_{ref}$ und das Verhältnis n der beiden Widerstände R bzw. n R des Stromspiegels eingeht. Der exakte Wert der Bias-Spannung $V_{bias}$ und des Bias-Stroms $I_{bias}$ spielt hierbei keine Rolle. Daher kann mit vergleichsweise geringem Aufwand eine hohe Genauigkeit erreicht werden. Neben $V_{ref}$ gehen lediglich die Paarungstoleranz des ersten und zweiten Transistors Q1, Q2 sowie der Widerstände R, n R des Stromspiegels, also der Faktor n, in den Laststrom $I_L$ ein.
Da es bekanntermaßen wesentlich einfacher und kostengünstiger ist, eine genaue Paarungstoleranz zwischen Bauelementen zu erreichen, als Bauelemente mit hoher Absolutgenauigkeit zu realisieren, lässt sich die obige Schaltungsanordnung 2 auf kostengünstige Weise realisieren, zumal sie auch mit nur wenigen Bauteilen auskommt.
Den Temperaturgang von $I_L$ erhält man, indem man in Gleichung (3) die Gleichung (4) für die Temperaturspannung $U_T$ einsetzt

$$I_L = \frac{V_{ref} + 86{,}17 \dfrac{\mu V}{K} \cdot T \cdot \ln \dfrac{I_C(Q2)}{I_C(Q1)}}{R_s} = \frac{V_{ref} + 86{,}17 \dfrac{\mu V}{K} \cdot T \cdot \ln \dfrac{1}{n}}{R_s} \;,$$

und nach der absoluten Temperatur differenziert:

$$\frac{d I_L}{dT} = \frac{86{,}17 \dfrac{\mu V}{K} \cdot \ln \dfrac{1}{n}}{R_S} \;.$$

Letztere Gleichung zeigt, dass zwischen Laststrom $I_L$ und Temperatur T, wie gefordert, ein linearer Zusammenhang besteht. Wird das Verhältnis n gleich eins gewählt, so ist der Laststrom temperaturunabhängig, was in dem Fall, dass der Stromfluss durch eine Last über einen weiten Temperaturbereich konstant sein soll, vorteilhaft sein kann.
Neben der in Fig. 2 gezeigten Schaltungsanordnung 2, welche einen Differenzverstärker mit emittergekoppelten Transistoren Q1, Q2 aufweist, kann diese auch mit basisgekoppelten Transistoren Q1, Q2 realisiert werden, wie nachfolgend anhand einer in Fig. 3 gezeigten Schaltungsanordnung 3 dargestellt wird.
Bei der Schaltungsanordnung 3 von Fig. 3 sind zunächst die Widerstände des Stromspiegels durch zwei Konstantstromquellen **I, n I** zur Erzeugung des konstanten Verhältnisses der beiden Kollektorströme $I_{C1}$, $I_{C2}$ ersetzt, so dass auf eine Bias-Stromquelle verzichtet werden kann. Der dritte und vierte Transistor Q3, Q4 dienen wie in Fig. 2 der Einstellung identischer Kollektor-Emitter-Spannungen $U_{CE1} = U_{CE2}$ am ersten und zweiten Transistor Q1, Q2. Hierzu wird die Basis-Kollektor-Strecke des ersten Transistors Q1 sowie die Basis-Kollektor-Strecke des vierten Transistors Q4 jeweils überbrückt. Aus einem Maschenumlauf nach Kirchhoff über die vier Transistoren Q1 bis Q4 ergibt sich, wenn man die Early-Spannung, die bei handelsüblichen Bipolartransistoren ca. 30 V bis 150 V beträgt, als Größenordnung zu Grunde legt, dass alle Basis-Emitter-Spannungen in der Schaltungsanordnung 3 näherungsweise identisch sind. Daraus ergibt sich unmittelbar die geforderte Eigenschaft näherungsweise identischer Kollektor-Emitter-Spannungen $U_{CE1} = U_{CE2}$ am ersten und zweiten Transistor Q1, Q2.

Aus der Berechnung des gemeinsamen Basis-Potentials des ersten und zweiten Transistors Q1, Q2 folgt die oben mit Bezug auf die Schaltungsanordnung 2 von Fig. 2 angegebene Gleichung (1) für den Laststrom $I_L$, sodass die dort gemachten Berechnungen auch für die Schaltungsanordnung 3 zutreffen. Der Laststrom $I_L$ kann daher auch bei der Schaltungsanordnung 3 von Fig. 3 linear in Abhängigkeit von der Temperatur geregelt werden.

Die Temperaturregelung des Laststroms $I_L$ mit den Schaltungsanordnungen 2, 3 kann in Abhängigkeit von der Umgebungstemperatur erfolgen, wenn die beiden zur Temperaturregelung eingesetzten Transistoren Q1, Q2 des Differenzverstärkers mit einem Umgebungsmedium, insbesondere einem Luftstrom einer Klimaanlage oder einer Kühlflüssigkeit eines Kühlwasserkreises thermisch gekoppelt sind. Alternativ oder zusätzlich ist es möglich, die beiden Transistoren mit der Last $R_L$ oder mit dem Leistungstransistor M1 thermisch zu koppeln, um eine thermische Überlastung dieser Bauelemente zu vermeiden.

Weiterhin weisen die in Fign. 2 und 3 gezeigten Schaltungsanordnungen 2, 3 zwar eine im Wesentlichen proportionale bzw. antiproportionale funktionale Abhängigkeit des Laststroms $I_L$ von der Temperatur T auf; es versteht sich aber, dass durch geeignete Modifikation der Schaltungsanordnungen 2, 3 auch nahezu beliebige andere funktionale Abhängigkeiten $I_L = f(T)$ eingestellt werden können, wodurch die Schaltungsanordnungen 2, 3 an eine Vielzahl von verschiedenen Lasttypen angepasst werden können. Insbesondere ist deren Einsatzgebiet daher nicht auf die Laststromregelung eines Gebläsemotors in einem Kraftfahrzeuggebläse beschränkt.

**Patentansprüche**

1. Schaltungsanordnung (2, 3) zur Regelung eines Stroms ($I_L$) durch eine Last ($R_L$), mit: einem Widerstand ($R_s$), der vom Laststrom ($I_L$) durchflossen wird und an dem eine Spannung ($V_S$) abfällt, welche als Regelgröße für die Regelung des Laststroms ($I_L$) dient, einem Abgriff (P) für eine Referenzspannung ($V_{ref}$), welche als Führungsgröße für die Regelung des Laststroms ($I_L$) dient, und einem Differenzverstärker zur Verstärkung der Regelabweichung ($V_{ref} - V_s$), **dadurch gekennzeichnet,** **dass** der Differenzverstärker zur Regelung des Laststroms ($I_L$) in Abhängigkeit von der Temperatur einen ersten und zweiten Transistor (Q1, Q2) aufweist, und dass die Schaltungsanordnung (2, 3) zum Betrieb der beiden Transistoren (Q1, Q2) bei gleicher Kollektor-Emitter-Spannung ($U_{CE1}$, $U_{CE2}$) und konstantem und von eins verschiedenem Verhältnis der Kollektorruheströme ($I_{C1}$, $I_{C2}$) ausgelegt ist.

2. Schaltungsanordnung nach Anspruch 1, **dadurch gekennzeichnet,** **dass** die beiden Transistoren (Q1, Q2) des Differenzverstärkers basisgekoppelt oder emittergekoppelt sind.

3. Schaltungsanordnung nach Anspruch 1 oder 2, **dadurch gekennzeichnet,** **dass** zur Erzeugung gleicher Kollektor-Emitter-Spannungen ($U_{CE1}$, $U_{CE2}$) die beiden Transistoren (Q1, Q2) des Differenzverstärkers in einer Kaskodenstruktur mit einem dritten und einem vierten Transistor (Q3, Q4) eingebettet sind.

4. Schaltungsanordnung nach einem der vorhergehenden Ansprüche, welche zwei Widerstände (R, n R) aufweist, deren Widerstandsverhältnis das konstante Verhältnis der Kollektorruheströme ($I_{C1}$, $I_{C2}$) festlegt.

5. Schaltungsanordnung nach einem der vorhergehenden Ansprüche, **dadurch gekennzeichnet,** **dass** die beiden Transistoren (Q1, Q2) des Differenzverstärkers durch einen Doppeltransistor gebildet sind.

6. Schaltungsanordnung nach einem der vorangehenden Ansprüche, **dadurch gekennzeichnet,** **dass** die Schaltungsanordnung (2, 3) einen weiteren Transistor, bevorzugt einen Leistungstransistor (M1), als Stellglied für den Regelkreis aufweist.

**7.** Schaltungsanordnung nach Anspruch 6,
**dadurch gekennzeichnet,**
**dass** die beiden Transistoren (Q1, Q2) des Differenzverstärkers thermisch mit dem weiteren Transistor (M1) gekoppelt sind.

**8.** Schaltungsanordnung nach einem der vorhergehenden Ansprüche, **dadurch gekennzeichnet,**
**dass** die beiden Transistoren (Q1, Q2) des Differenzverstärkers thermisch mit der Last ($R_L$) gekoppelt sind.

**9.** Schaltungsanordnung nach einem der vorhergehenden Ansprüche,
**dadurch gekennzeichnet,**
**dass** die beiden Transistoren (Q1, Q2) des Differenzverstärkers thermisch mit einem Umgebungsmedium, insbesondere einem Luftstrom einer Klimaanlage oder einer Kühlflüssigkeit eines Kühlwasserkreises, gekoppelt sind.

**10.** Schaltungsanordnung nach einem der vorhergehenden Ansprüche, welche aus diskreten Bauteilen aufgebaut ist.

**11.** Kraftfahrzeuggebläse mit einer Schaltungsanordnung (2, 3) nach einem der vorhergehenden Ansprüche, bei dem die Last ($R_L$) durch einen Gebläsemotor gebildet ist.

**12.** Verfahren zum temperaturabhängigen Regeln eines Stroms ($I_L$) durch eine Last ($R_L$) mittels einer an einem vom Laststrom ($I_L$) durchflossen Widerstand ($R_S$) abfallenden Spannung ($V_S$) als Regelgröße für die Regelung des Laststroms ($I_L$) sowie mittels einer Referenzspannung ($V_{ref}$) als Führungsgröße für die Regelung des Laststroms ($I_L$), wobei die Regelabweichung ($V_{ref} - V_s$) in einem Differenzverstärker verstärkt wird,
**dadurch gekennzeichnet,**
**dass** zur Regelung des Laststroms ($I_L$) in Abhängigkeit von der Temperatur ein erster und zweiter Transistor (Q1, Q2) des Differenzverstärkers bei gleicher Kollektor-Emitter-Spannung ($U_{CE1}$, $U_{CE2}$) und konstantem und von eins verschiedenem Verhältnis der Kollektorruheströme ($I_{C1}$, $I_{C2}$) betrieben werden.

Fig. 1

Fig. 2

Fig. 3

EP 2 019 349 A1

Europäisches
Patentamt

European
Patent Office

Office européen
des brevets

**EUROPÄISCHER RECHERCHENBERICHT**

**Nummer der Anmeldung**

EP 08 01 1311

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 10 2005 010013 A1 (INFINEON TECHNOLOGIES AUSTRIA [AT]) 14. September 2006 (2006-09-14) * das ganze Dokument * ----- | 1-12 | INV. G05F1/56 |
| Y | US 4 095 164 A (AHMED ADEL ABDEL AZIZ) 13. Juni 1978 (1978-06-13) * das ganze Dokument * ----- | 1-12 | |
| A | EP 1 422 819 A (BTM S R L [IT]) 26. Mai 2004 (2004-05-26) * das ganze Dokument * ----- | 1-12 | |
| A | EP 0 354 098 A (VALEO ELECTRONIQUE [FR]) 7. Februar 1990 (1990-02-07) * das ganze Dokument * ----- | 1-12 | |

RECHERCHIERTE SACHGEBIETE (IPC)

G05F

Der vorliegende Recherchenbericht wurde für alle Patentansprüche erstellt

| Recherchenort | Abschlußdatum der Recherche | Prüfer |
|---|---|---|
| Den Haag | 7. November 2008 | Arias Pérez, Jagoba |

**ANHANG ZUM EUROPÄISCHEN RECHERCHENBERICHT
ÜBER DIE EUROPÄISCHE PATENTANMELDUNG NR.**

EP 08 01 1311

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-11-2008

| Im Recherchenbericht angeführtes Patentdokument | Datum der Veröffentlichung | Mitglied(er) der Patentfamilie | Datum der Veröffentlichung |
|---|---|---|---|
| DE 102005010013 A1 | 14-09-2006 | KEINE | |
| US 4095164 A | 13-06-1978 | KEINE | |
| EP 1422819 A | 26-05-2004 | KEINE | |
| EP 0354098 A | 07-02-1990 | FR 2634916 A1 | 02-02-1990 |

Für nähere Einzelheiten zu diesem Anhang : siehe Amtsblatt des Europäischen Patentamts, Nr.12/82

EPO FORM P0461